# EUROPEAN PATENT APPLICATION

(11) **EP 3 076 373 A1**
(43) Date of publication of application: **05.10.2016**
(21) Application number: 16162403.6
(22) Date of filing: 24.03.2016
(51) Int. Cl.: G07G 1/14, G06Q 20/20, H04L 29/08

(54) **DISCOVERABLE AND SHAREABLE DEVICE BROKERS IN POS SYSTEM**

(30) Priority: 31.03.2015 US 201514674369
(71) Applicant: Toshiba Global Commerce Solutions Holdings Corporation, Tokyo 141-8664 (JP)
(72) Inventor: REVERON, Ramon, 00953 Toa Alta (PR); LIU, Xianhua, Chapel Hill, NC North Carolina 27516 (US); NIKOLAJEV, Pavel, Apex, NC North Carolina 27502 (US)
(74) Representative: Appleyard Lees IP LLP

(57) **Abstract**

A POS system includes a device broker server (400) that is shared by multiple client devices (200) in the POS system. The device broker server (400) manages POS devices (e.g. cash drawer, bar code scanner, receipt printer, card reader, etc.) and device-related business functions (e.g. payment handling, receipt printing, scanning, etc.). A discovery mechanism enables the client devices (200) to discover the device broker server (400). The client devices (200) may select a device broker and send service requests to the selected device broker server (400). The device broker server (400) controls the POS devices to provide the requested service and sends response messages to the client devices (200) indicating the results of the services provided by the device broker utilizing the POS devices.

## Description

### TECHNICAL FIELD

The present disclosure released generally to point of sale terminals used in the operation of retail stores and other establishments and, more particularly, a distributed point of sale system having shareable device brokers.

### BACKGROUND

Point of Sale (POS) systems may utilize a number of different devices such as scanners, pin pads, receipt printers, card readers and similar devices to complete sales transactions. Many current POS systems use platform-specific software components to communicate with such POS devices. The software components are written in different languages (e.g. Java, .net), making reuse of the software components and cross platform support difficult. For example, a POS system developed for LINUX® platform cannot run on a WINDOWS® platform. Similarly, a POS system developed for a desktop computer cannot run on a mobile device, and a POS system for an ANDROID® device cannot run on an IOS device.

The TCxgravity® system offered by Toshiba resolves the cross platform support issue by using a web based client that connects with POS devices through a device broker. The device broker runs on the same host as the web based client. This arrangement limits the types of platforms on which the POS system can run. Another challenge is that it can be hard to share POS devices among multiple POS applications deployed on the same or different platforms.

### BRIEF DESCRIPTION OF THE DRAWINGS

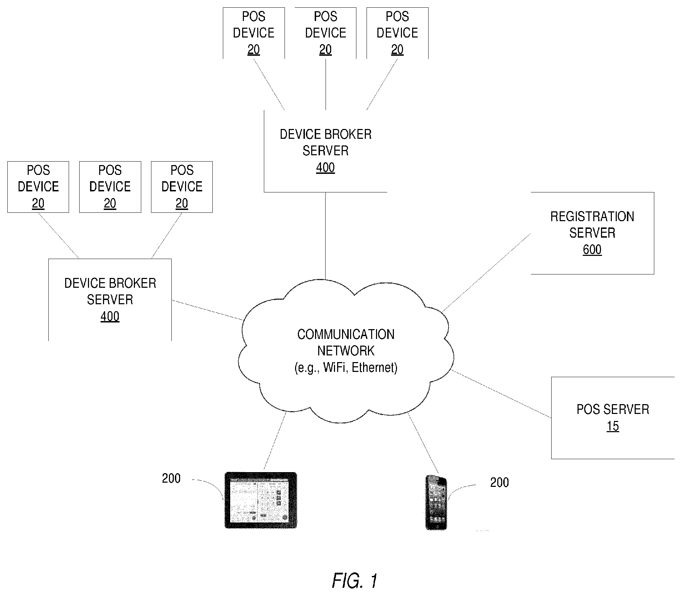

Figure 1 illustrates a POS system according to one embodiment of the disclosure.
Figure 2 illustrates the signaling between components of the POS system shown in Figure 1.
Figure 3 illustrates a registration method for registering a device broker server with a device broker registry maintained by a registration server.
Figure 4 illustrates a discovery method enabling client devices to discover device broker servers in the POS system,
Figure 5 illustrates a method implemented by a client device for requesting device-related services from a device broker server.
Figure 6 illustrates a method implemented by a device broker server for providing device-related services to a client device.
Figure 7 illustrates an exemplary client device for the POS system shown in Figure 1.
Figure 8 illustrates the main functional components of the processing circuit for a client device in the POS system.
Figure 9 illustrates the main functional components of a POS application installed in a client device.
Figure 10 illustrates an exemplary device broker server for the POS system.
Figure 11 illustrates the main functional components of the processing circuit for a device broker server in the POS system.
Figure 12 illustrates the main functional components of a device broker application installed in a device broker server.
Figure 13 illustrates an exemplary registration server for the POS system shown in Figure 1.
Figure 14 illustrates the main functional components of the processing circuit for a registration server in the POS system.
Figure 15 illustrates the main functional components of a registration application installed in a registration server.

### DETAILED DESCRIPTION

The present disclosure relates to a POS system having a shareable device broker service. The device broker application running on a device broker server manages POS devices (e.g. cash drawer, bar code scanner, receipt printer, card reader, etc.) and device-related business functions (e.g. payment handling, receipt printing, scanning, etc.). A POS application running on a separate client device communicates with the device broker application over a communication network via Transport Communication Protocol (TCP) and/or websocket transports. A discovery mechanism is provided to enable the client devices to discover the device broker server. The client devices may select a device broker and send service requests to the selected device broker server. The device broker server controls the POS devices to provide the requested service and sends response messages to the client devices indicating the results of the services provided by the device broker utilizing the POS devices.

The POS system as herein described abstracts the POS devices and device-related services into a service layer that is separate from the POS application. The POS application becomes a client requiring only a thin web-based application. The device broker application and platform may be sold as a separate product.

Referring now to the drawings, an exemplary point of sale (POS) system is shown therein and indicated generally by the numeral 10. The function of the POS system 10 is to facilitate sales transactions between a retail store or other establishment and a customer. The main functional components of the POS system 10 comprise a POS server 15, one or more client devices 200, one or more device broker servers 400, a registration server 600, and a plurality of POS devices 20. The client devices 200, device broker server 400, and registration server 600 communicate with each other over a communication network using JavaScript Object Notation (JSON), Extensible Markup Language (XML), or other known data exchange languages.

In one embodiment, the client device 200 comprises a mobile computing device such as such as smart phone, tablet, laptop computer, or similar devices configured to function as a POS terminal. The client devices 200 may use any type of operating system (OS) including a Windows®, Android®, Apple®, Linux®, or other OS. The client devices 20 have a web-based POS application installed for handling POS transactions. The client devices 20 and are used by sales associates or other personnel in the retail store or other establishment to complete point of sale transactions with a customer. The client devices 20 may, in some embodiments, communicate with a POS server 15 that maintaining records for point of sale transactions.

The device broker server 400 comprises a separate mini-server or other computer configured to provide device broker services as herein described. The device broker server 400 may include an embedded operating system (OS), such as a LINUX® OS. A device broker application is installed on the device server 400 and communicates with the POS applications on the client devices 200 over a communication network via Transport Control Protocol (TCP) and or web socket transports. The device broker server 400 manages one or more POS devices 20 (e.g. bar code scanner, receipt printer, cash drawer, etc.) and device-related business functions (e.g. payment handling, receipt printing, etc.). The device broker server 400 eliminates the need of the POS applications on the client devices 20 to manage the individual POS devices 20 and enables the sharing of POS devices 20 between client devices 20. The client devices 20 may request device-related services of the device broker server 400 offered utilizing one or more of the POS devices 20. The POS server 15 provides the requested services to the client devices 20 utilizing the controlled POS devices 20 and sends response messages to the client devices 20 associated with the services.

The registration server 600 comprises a computer configured to maintain a registry of device broker servers 40. The registration server 400 may include an embedded operating system (OS), such as a LINUX® OS. The registration server 600 receives registration requests from the device broker servers 40 and adds the device broker servers 40 to the device broker registry. The registration server 600 may be queried by the client devices 20 to discover the device broker servers 40 in the POS system 10.

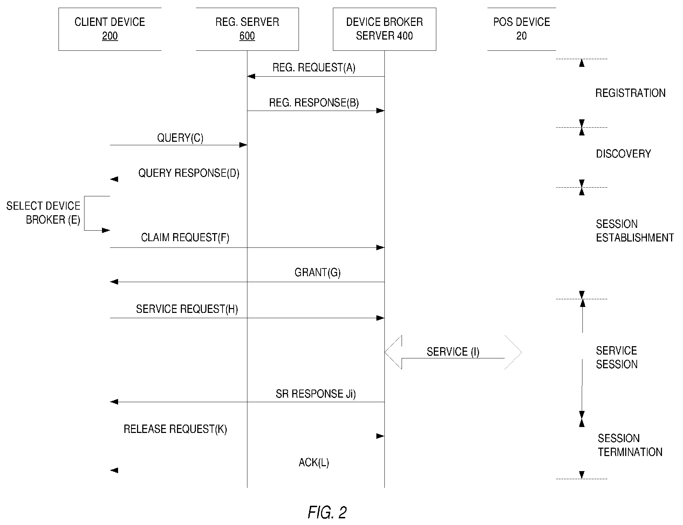

Figure 2 illustrates communications between various components of the POS system 10 in one exemplary embodiment. When a device broker server 400 is set up, it sends a registration request to the registration server 600 (step a). The registration request contains a unique device broker identifier, a list of available services and/or devices, and a descriptive name. This data will be maintained in a device broker registry and used by client devices 200 to discover and select available device broker servers 40. The registration server 600 sends a registration response to the device broker server 400 indicating that the registration request is accepted or declined (step b). If the registration request is declined, the registration response message may include a code indicating a reason for declining the registration request. The device broker server 400 may then send another registration request.

Once the device broker server 400 is registered in the device broker registry, the device broker server 400 is discoverable by client devices 200. More particularly, a client device 200 may discover a device broker server 400 by querying the device broker registry. To query the device broker registry, the client device 200 sends a query to the registration server 600 (step c). The query may include a unique client identifier. In response to the query, the registration server 600 sends a query response to the client device 200 including a list of device broker servers 400 (step d). In one embodiment, the list may include, for each device broker server 400, a unique device broker identifier, a descriptive name associated with the device broker sever 400, the network address of the device broker server 400, and available devices/services associated with device broker server 400.

In some embodiments, the registration server 600 may also function as a presence server. The device broker servers 40 may report a presence status (e.g., online, offline, busy, etc.) to the registration server 600. The device broker list provided by the registration server 600 to the client device 200 may include the current presence status of each device broker server 400.

The client devices 200 may request device-related services from a device broker server 400. The POS application executing on the client device selects a device broker server (step e). The selection of the device broker server 400 may be based on user input, or may be selected automatically by the POS application on the client device. In one exemplary embodiment, the POS application on the client device 200 sends a claim request with a unique plan identifier to the device broker server 400 to request permission to use the service (step f). If the device broker server 400 grants the request, it returns a grant message to the client device 200 giving permission to the requesting client device 200 to use the services of the device broker server 400 (step g). In one exemplary embodiment, the grant of the claim request establishes a session between the device broker server 400 and client device 200. In one exemplary embodiment, the device broker server 400 is configured to support one session at a time with one client device 40. Once a session is established, the device broker server 400 will reject any claim request from other client devices 200 until the session with the current client device 200 is terminated. In other embodiments, the device broker server 400 may be configured to support concurrent sessions with multiple client devices 200.

Once a client device 200 establishes a session with a device broker server 400, the client device 200 may send service requests to the device broker server 400 to request device-related services (step h). Table 1 below provides a non-exhaustive list of exemplary service requests that may be sent by the client device 200.

| **Table 1: Service Requests and Related Devices** | | |
|---|---|---|
| **Service Request** | **Service** | **Related POS device** |
| PayByCash | Handling device for cash payments | Cash drawer |
| PayByCredit | Handling device for credit card payments | Card Reader |
| PayByCheck | Handling devices for check processing | Check scanner |
| ScanProduct | Handling devices for scanning product codes | Bar code reader |
| PrintReceipt | Handling devices for receipt printing | Receipt printer |

Responsive to the service request, the device broker server 400 controls one or more POS devices 20 to provide the requested service and sends one or more response to the client device 200 (step i, j). For example, assume that a sales associate using a client device 200 needs to print a receipt for a customer. In this example, the client device 200 may send a PrintReceipt request to the device broker server 400. The PrintReceipt request, contains information that is required to print the receipt, such as the transaction number, items purchased, purchase price, date, etc. Upon receipt of the PrintReceipt request, the device broker server 400 controls a POS device (in this case a receipt printer) to print the receipt. When the receipt is printed, the device broker server 400 sends a response to the client device 200 indicating that the receipt has been printed.

During a session, the client device 10 may send multiple service requests to the device broker server 400. For each service request, the device broker server 400 controls one or more POS devices 20 to provide the requested services and provides a response indicating the result of the actions performed by the device broker server 400 responsive to the service request. In one exemplary embodiment, service requests are handled synchronously. That is, when the client device 200 sends a service request to the device broker server 400, the client device 200 may not send another service request until the previous service request is completed. In other embodiments, the service requests may be sent asynchronously. In this case, the client device 200 may send a new service request to the device broker server 400 before the previous service request is completed. The device broker server 400 may maintain the service request in a queue and perform the requested services in the order in which they are received. Alternatively, the device broker server 400 may prioritize service requests and process them in order of priority.

Once the session has ended, the POS application on the client device 200 may send a release request to the device broker server 400 to terminate the session and release the device broker server 400 (step k). The device broker server 400 sends an acknowledgement (ACK) to the client device (step I). After acknowledging the release request, the device broker server 400 is then available for use by other client devices.

To illustrate the functionality of the device broker service, assume that Carol is a cashier working in a grocery store having two device broker servers 400 available, each of which is connected to a cash drawer. Carol uses a POS application on a client device 200 with no cash drawer connected. In order to complete a cash sale, the following steps are performed:
(1) The client device 200 sends a query to the registration server 600 to obtain a list of available device broker servers 40 with cash drawers.
(2) The registration server 600 returns a device broker list with two device broker servers 400. The list includes descriptive names that are recognizable by Carol.
(3) Carol chooses a device broker server 400 that is close to her current location.
(4) The client device 200 sends a claim request to the selected device broker server 400. The claim request includes the unique identifier of the client device 200.
(5) The targeted device broker 40 receives the claim request and grants permission to the client device 200 to use the device broker server 400. The device broker server 400 sends a grant message to the client device 200 including the unique identifier associated with the POS application on the client device.
(6) The client device 200 receives the grant message and checks the unique identifier. The client device 200 checks to confirm that the unique identifier in the received grant message matches the client identifier of the client device 200. Therefore, the client device 200 may begin to use the device broker server 400.
(7) The client device 200 sends a PayByCash request to the device broker server 400 with the cash amount.
(8) The device broker server 400 starts the PayByCash service, opens the cash drawer and waits for Carol to process the cash transaction. After Carol closes the cash drawer, the device broker server 400 sends a payment complete message to the client device 200.
(9) The client device 200 receives the response message from the device broker server 400 and sends a release request to the device broker server 400 to terminate the session.
10) The device broker server 400 sends an acknowledgement (ACK) message to the client device 200 and the session is terminated.

As the above example demonstrates, the POS application on Carol's client device 200 does not need to know the implementation and control details to manage the cash drawer. It simply discovers and claims the device broker server 400, and then sends a service request to the device broker server 400. The device broker server 400 manages the cash drawer and other POS devices 20 for the client device 200. Thus, the POS application on the client device 200 is insulated from the underlying details of device management.

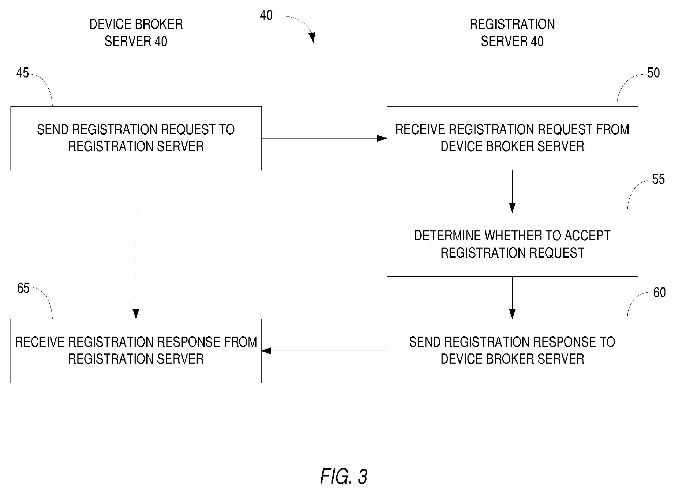

Figure 3 illustrates an exemplary registration method 40 implemented by a device broker server 400 and registration server 600. To register with the registration server 600, the device broker server 400 sends a registration request to the registration server (block 45). After sending the registration request, the device broker server 400 waits for a response from the registration server 600. The registration server 600 receives the registration request from the device broker server (block 50). In response to the registration request, the registration server 600 determines whether to accept the registration request (block 55) and sends a registration response to the device broker server 400 indicating whether the registration was accepted (block 60). The device broker server 400 receives the registration response from the registration server 600 indicating whether the registration was accepted (block 65).

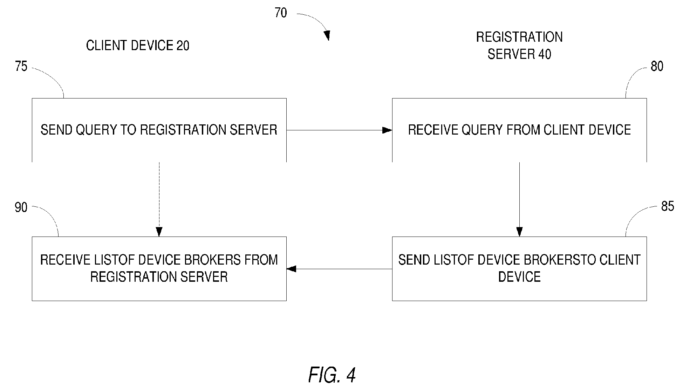

Figure 4 illustrates an exemplary discovery method 70 implemented by a client device 200 and registration server 600 to enable the client device 200 to discover the available device broker servers 40. The client device 200 sends a query to the registration server (block 75). After sending the query, the client device 200 waits for a response from the registration server 600. The registration server 600 receives the query from the client device 200 (block 80). In response to the query, the registration server retrieves the list of device broker servers 400 from the device broker registry (block 85). The list may comprise all the device broker servers 400 or only those device broker servers 40 deemed available. In embodiments where the list of all device broker servers is generated, the registration server 600 may include presence status information (e.g. online, offline, busy) in the list of device broker servers 400. The registration server 600 sends the list of device broker servers to the client device 200 (block 85). The client device 200 receives the list of device broker servers 400 from the registration server (block 90). In some embodiments, the list of device broker servers 400 is displayed in the user interface of the client device 200 so that a user of the client device 200 can select a device broker server 400. In other embodiments, the client device may automatically select the device broker server 400, for example, based on the location of the client device 10.

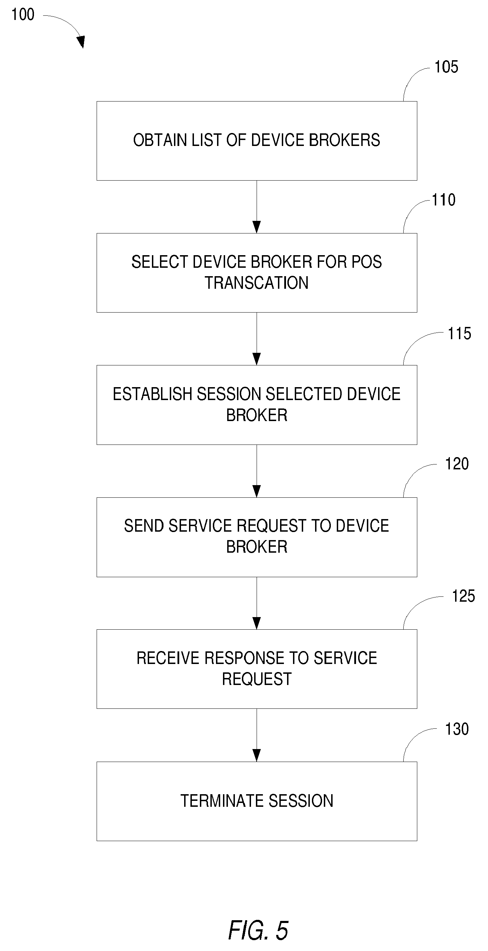

Figure 5 illustrates an exemplary method 100 implemented by a client device 200 to obtain device related services from a device broker server 400. The client device 200 initially obtains the list of device broker servers 400 (block 105). In one embodiment, the list of device broker servers 400 may be obtained by querying a registration server 600 as shown in Figure 4. The client device 200 selects a device broker server 400 from the device broker list to handle device-related services for a particular sales transaction (block 110). In some embodiments, the selection of the device broker server 400 is made responsive to user input. In other embodiments, the selection of the device broker server 400 may be made automatically by the POS application on the client device 200. For example, the POS application may be configured to select the device broker server 400 based on a current location of the client device 200.

After the device broker server 400 for the sales transaction is selected, the client device 200 establishes a session with the selected device broker server 400 (block 115). In one embodiment, a session is established by sending a claim request to the device broker server 400 requesting permission to use the services of the device broker server 400. If the request is granted, the device broker server 400 sends a grant message to the client device 200 giving the client device permission to use the device broker server 400. A session is then established between the client device 10 and the device broker server 400. In some embodiments, the device broker server 400 may be configured to support a single session at a time with one client device 200. In other embodiments, the device broker server 400 may be configured to support multiple, concurrent sessions with different client devices 200.

Once a session is established, the client device 200 sends a service request to the device broker server 400 to request a device-related service (block 120). A device-related service is a service that requires use of one of the POS devices 20 controlled by the device broker server 400. Exemplary service requests include a PayByCash request, a PayByCredit request, a PayByCheck request, a Scan Product request and PrintRecipt request. Other device-related services could also be offered by the device broker server 400. After sending the request, the client device 200 waits for the device broker server 400 to perform the requested service. When the requested service is performed, in whole or in part, the client device 200 receives a service request response from the device broker server 400 (block 125). The service request response indicates a result of the service performed by the device broker server 400 utilizing one of the POS devices 20. The result may be an intermediate result (e.g., cash drawer is opened) or a final result (e.g., cash transaction completed). In some embodiments, a single service request may result in multiple service request responses.

Once the service request is completed, the client device terminates the session with the device broker server 400 (block 130). In one embodiment, the session is terminated by sending a release request to the device broker server 400. The device broker server 400 sends an acknowledgement message (ACK) to the client device 200 indicating the session is terminated.

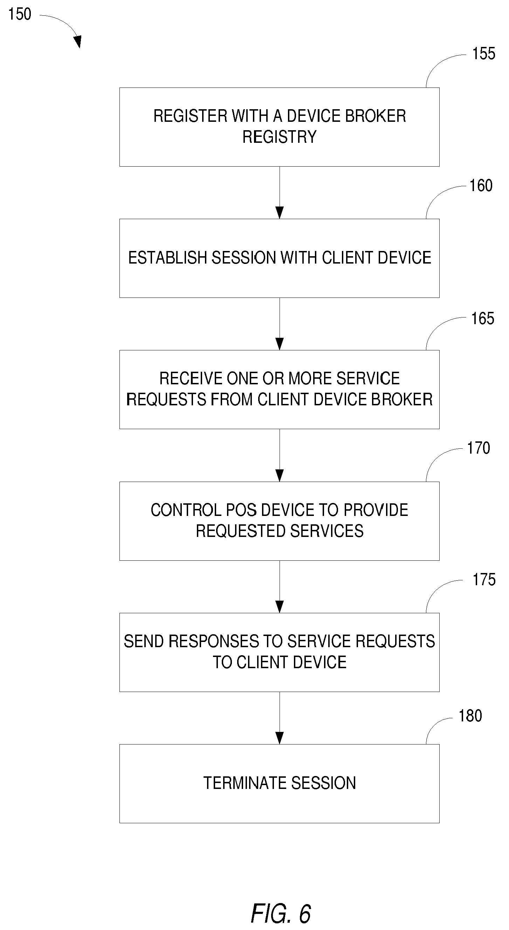

Figure 6 illustrates an exemplary method 150 implemented by a device broker server 400 of providing device-related services to a client device 200. Before device-related services can be provided, the device broker server 400 registers with a device broker registry to make itself discoverable to client devices 200 (block 155). Once the device broker server 400 is registered, a device broker server 400 can be discovered by client devices 200 that need device-related services.

In order to provide the device-related services, the device broker server 400 establishes a session with a client device 200 (block 160). Typically, the session establishment procedure is initiated by the client device 200 to support a sales transaction. In one embodiment, the device broker server 400 receives a claim request from a client device 200 needing device-related services to support a sales transaction. If the device broker server 400 is available (e.g., not currently engaged in another session), the device broker server 400 sends a grant message to the client device 200 giving permission to the client device 200 to use the services of the device broker server 400. Receipt of the grant message by the client device 200 establishes a session between the client device 200 and the device broker server 400.

Once the session is established, the device broker server 400 may receive one or more service requests from the client device 200 (block 165). For each service request, the device broker server 400 controls one or more POS devices 20 to provide the requested service (block 170) and sends appropriate service request responses (block 175) to the client device 200. The service request responses indicate a result of the services provided by the device broker server 400 and may be based on an action performed by one or more POS devices 20. For example, if the client device 200 requests a receipt for the sales transaction, the device broker server 400 controls the receipt printer to print the receipt. Data needed for printing the receipt is included in the service request. Once the receipt is printed, the device broker server 400 sends a service request response to the client device 200 indicating that the receipt was printed.

Once all requested services are performed, the session with the client device 200 is terminated (block 180). In one embodiment, the client device 200 sends a release request to the device broker server 400 after the sales transaction is completed to terminate the session. The device broker server 400 sends an acknowledgement message to the client device and terminates the session. In some embodiments, the device broker server 400 may also terminate the session based on expiration of an activity timer. When a service request is completed, a device broker server 400 may start a timer. If the timer expires before another service request is received, the device broker server 400 may terminate the session. In the event that the sales transaction was not complete, the client device 200 will need to establish a new session to complete the sales transaction.

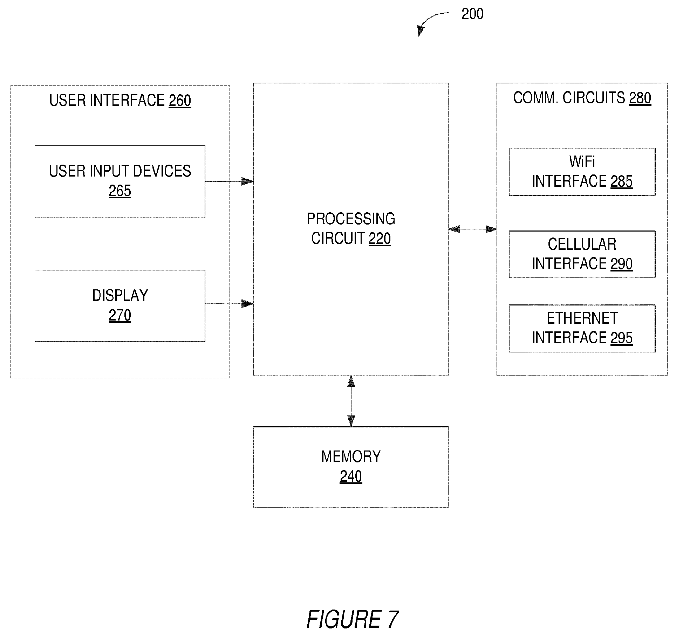

Figure 7 shows an exemplary client device 200 according to one embodiment of the disclosure. The client device 200 generally comprises a processing circuit 220, memory 240, user interface 260 and communication circuits 32.

The processing circuit 220 comprises one or more microprocessors, hardware circuits, firmware or a combination thereof configured to control the operation of the client device 200 and perform the methods as herein described. Program code and data needed for operation are stored in memory 240. Program code needed for operation and permanent data are stored in a non-volatile memory, which may comprise a solid state memory device, magnetic media, or optical media. Temporary data may be stored in a volatile memory such as a random access memory (RAM).

The user interface 260 provides a means for a user to interact with the client device 200. The user interface 260 comprises one or more user input devices 265 and a display 270. The user input devices 265 enable the user to input data and commands into the client device 200. The display 270 enables the user to view information generated by the POS application on the client device 200. The user input devices 260 may include one or more of a keypad, function keys, switches, touchpad, touchscreen, joystick, trackball, pointing device, or other input devices. The display 270 may comprise a liquid crystal display (LCD), light emitting diode (LED) display, electronic ink display, or other known type of display. In some embodiments, the display 30 may be a touchscreen display that also functions as a user input device 260.

The communication circuits 280 comprise one or more interface circuits for communicating with remote devices over a communication network. In the exemplary embodiment shown in Figure 7, the communication circuits 280 include one or more of a short-range radio interface (e.g. BLUETOOTH® or Wi-Fi) 285, a cellular interface 290 (e.g., WCDMA, LTE), and an Ethernet interface 295.

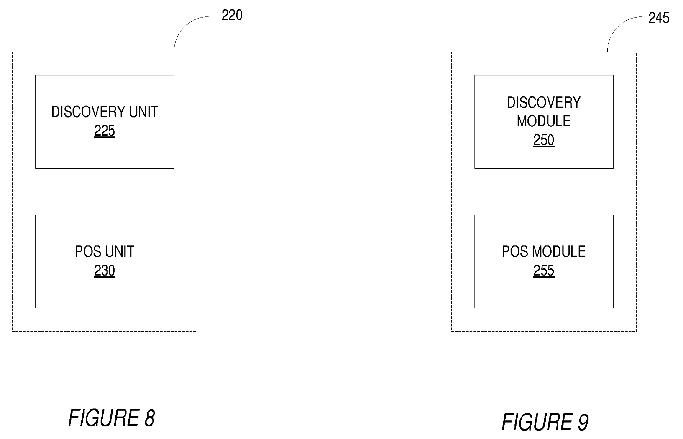

Figure 8 illustrates the main functional components of the processing circuit 220 in one embodiment. The processing circuit 220 includes a device discovery unit 225 and a POS unit 230. The device discovery unit 225 is configured to perform discovery related functions in order to discover the device broker servers 400. The functions performed by the device discovery unit 225 may include, for example, sending queries to the registration server 600 and receiving query responses from the registration server 600 including the device broker list. The device broker list obtained from the registration server 600 is provided to the POS unit 230. The POS unit 230 handles all sale-related functions. To carry out these functions, the POS unit 230 communicates with the POS server 15 and device broker server 400 via one or more of the communication circuits 280. The functions performed by the POS unit 230 include selecting a device broker server 400, establishing a session with the selected device broker server 400, sending a service request to the device broker server 400, receiving a service request response from the device broker server 400, and terminating the session with the device broker server 400.

Figure 9 illustrates the main functional components of a POS application 245 that is installed on the client device 200 and executed by the processing circuit 220 of the client device 200. The POS application is a client application that communicates with the device broker application running on a device broker server 400. The POS application 245 comprises a device discovery module 250 and a POS module 255. The device discovery module 250 contains program code for discovery related functions. For example, the discovery module 250 may comprise program code for sending queries to the registration server 600 and receiving query responses from the registration server 600 including the device broker list. The POS module 255 comprises codes for handling all sales related functions including selecting a device broker server 400, establishing a session with the selected device broker server 400, sending a service request to the device broker server 400, receiving service request responses from the device broker server 400, and terminating sessions with the device broker server 400.

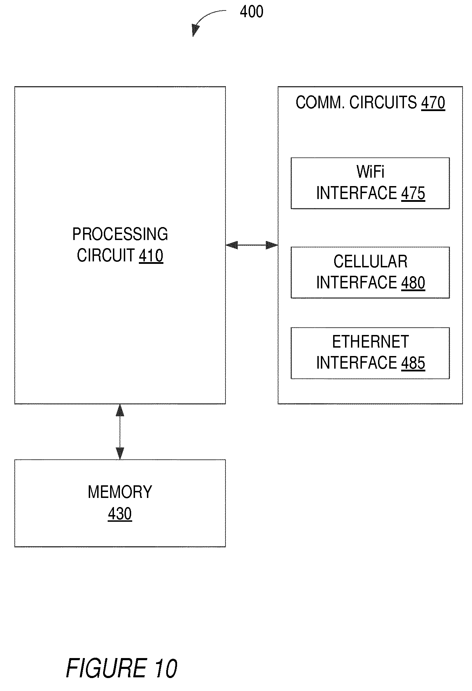

Figure 10 shows an exemplary device broker server 400. The device broker server 400 comprises a processing circuit 410, memory 430, and communication circuits 470. The processing circuit 410 comprises one or more microprocessors, hardware circuits, firmware or a combination thereof configured to control the operation of the device broker server 400. Program code and data needed for operation are stored in memory 430. Program code needed for operation and permanent data are stored in a non-volatile memory, which may comprise a solid state memory device, magnetic media, or optical media. Temporary data may be stored in a volatile memory such as random access memory. The communication circuits 470 comprise one or more interface circuits for communicating with remote devices over a communication network. In the exemplary embodiment shown in Figure 10, the communication circuits 470 include one or more of a short range radio interface (e.g., Bluetooth or Wi-Fi) 475, a cellular interface 480 (e.g. WCDMA, LTE), and an Ethernet interface 485.

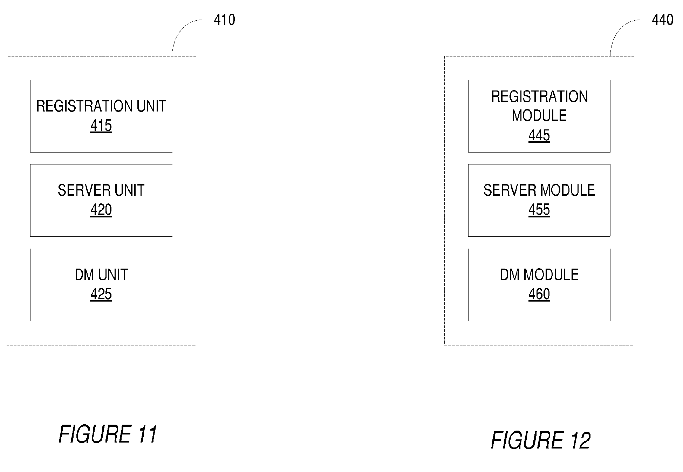

Figure 11 illustrates the main functional components of the processing circuit 410 for the device broker server 400. The processing circuit 410 includes a registration unit 415, a server unit 420, and a device management (DM) unit 425. The registration unit 415 handles functions related to registration with the device broker registry. These functions include sending registration requests to the registration server 600 and receiving registration responses from the registration server 600. The server unit 420 handles interactions with the client devices 200. Functions performed by the server unit 420 include establishing sessions with client devices 200, receiving and responding to service requests from client devices 200, and terminating sessions with client devices 200. The device management unit 425 is responsible for managing POS devices 20 in order to provide requested services to the client devices 200. The device management unit 425 may send commands to POS devices 20 in order to control the POS devices 20 and receive data from the POS devices 20 related to the service being performed by the device broker server 400.

Figure 12 illustrates the main functional components of a device broker application 440 that is installed in memory 430 on the device broker server 400 and executed by the processing circuit 410. The device broker application 440 is a server application that communicates with POS applications 245 running on client devices 200. The device broker application 440 includes a registration module 445, a server module 450, and a device management (DM) module 460. The registration module 445 handles functions related to registration with the device broker registry. These functions include sending registration requests to the registration server 600 and receiving registration responses from the registration server 600. The server module 455 comprises program code for handling interactions with the client devices 200. Functions performed by the server module 455 include establishing sessions with client devices 200, receiving and responding to service requests from client devices 200, and terminating sessions with client devices 200. The device management module 425 comprises code for managing POS devices 20 in order to provide requested services to the client devices 200. The device management module 460 comprises code for controlling the POS devices 20. The device management module 460 sends commands to POS devices 20 in order to control the POS devices 20 and receives data from the POS devices 20 related to the service being performed by the device broker server 400. Information received from the POS devices 20 is provided to the server module 450.

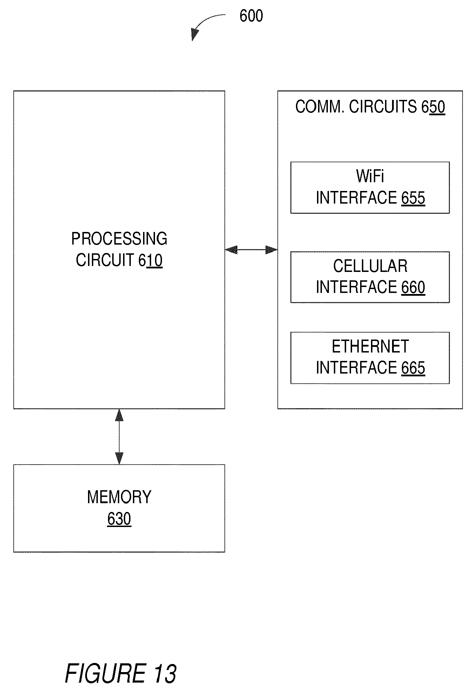

Figure 13 shows an exemplary registration server 600. The device broker server 600 comprises a processing circuit 610, memory 630, and communication circuits 650. The processing circuit 610 comprises one or more microprocessors, hardware circuits, firmware or a combination thereof configured to control the operation of the device broker server 600. Program code and data needed for operation are stored in memory 630. Program code needed for operation and permanent data are stored in a non-volatile memory, which may comprise a solid state memory device, magnetic media, or optical media. Temporary data may be stored in a volatile memory such as random access memory. The communication circuits 650 comprise one or more interface circuits for communicating with remote devices over a communication network. In the exemplary embodiment shown in Figure 10, the communication circuits 650 include one or more of a short range radio interface (e.g., Bluetooth or Wi-Fi) 655, a cellular interface 660 (e.g., WCDMA, LTE), and an Ethernet interface 665.

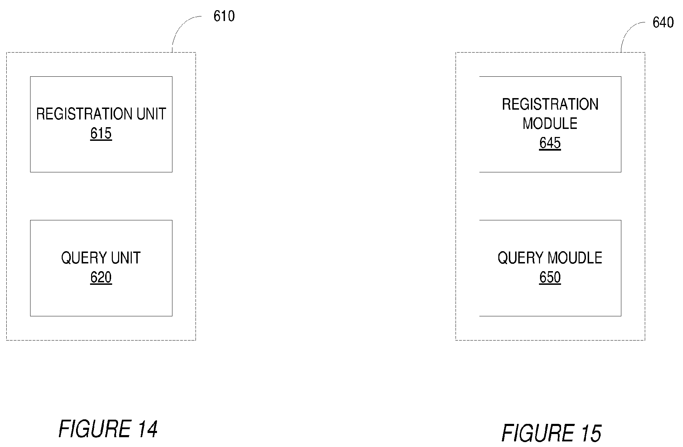

Figure 14 illustrates an exemplary processing circuit 610 for a registration server 600. The processing circuit 610 includes a registration unit 615 and a query unit 620. The registration unit 615 handles functions related to registration of the device broker servers 400. These functions include receiving registration requests from the device broker servers 400, updating and maintaining a device broker registry, and sending registration responses to the device broker server 400. The query module 620 handles functions related to device broker discovery including receiving queries from client devices 200, retrieving data from the device broker registry, and sending query responses to the client devices 200.

Figure 15 illustrates the main functional components of a registration server application 640 that is installed in the memory 630 on the registration server 600 and executed by the processing circuit 610. The registration server application 640 comprises a registration module 645 and a query module 650. The registration module 645 comprises code for handling functions related to registration of the device broker servers 400. These functions include receiving registration requests from the device broker servers 400, updating and maintaining a device broker registry, and sending registration responses to the device broker server 400. The query module 650 comprises code for handling functions related to device broker discovery including receiving queries from client devices 200, retrieving data from the device broker registry, and sending query responses to the client devices 200.

The POS system 10 as herein described includes a separate device broker server 400 that is configured to handle device-related functions for client devices 200, a discovery mechanism to enable discovery of the device broker server 400 by client devices 200, and a claim-release mechanism that enables sharing of the device broker servers 400 by multiple client devices 200. Because the client devices 200 are insulated from the details of device management, a thin web-based POS application can be implemented on the client devices 200. The device broker can implement a JAVA-based application to fully support client devices 200 running on any platform (e.g., WINDOWS®, APPLE ®, IOS, LINUX®, etc). Because the device broker server 400 is separate from the client devices 200, the device broker server 400 and related applications can be packaged and sold as a separate product/service.

## Claims

1. A method (100) implemented by a client device (200) functioning as a POS terminal within a retail store, said method comprising:
obtaining (105), by the mobile client device (200), a list of device broker servers (400), each device broker configured to control one or more point of sale devices within said retail store;
selecting (110), from said list, a device broker server (400) for a point of sale transaction;
establishing (115) a session with the selected device broker server (400);
sending (120) a service request to the selected device broker server (400) to request a service offered by the device broker server (400) utilizing one of the point of sale devices (20);
receiving (125), during said session, a response message from the device broker server (400) responsive to the service request, wherein the response message indicates a result of the requested service provided by the device broker server utilizing the point of sale device (20); and
terminating (130) the session with the device broker server (400).

2. The method (100) of claim 1 wherein obtaining (105) a list of device broker servers (400) comprises:
sending (C) a query to a registration server (600) that maintain device broker registry (75);
receiving (D), responsive to the query, a list of available device broker servers (400) from the registration server (90).

3. The method (100) of claim 1 wherein selecting (110) a device broker server (400) for a point of sale transaction comprises one of:
selecting (E) the device broker server (400) responsive to user input; and
selecting (E) the device broker server (400) based on a location of the client device (200).

4. A method (150) implemented by a device broker server (400) in a retail store, said device broker server (400) controlling one or more point of sale devices, said method comprising:
registering (155) with a device broker registry (155);
receiving, from a client device (200), a claim request requesting services of the device broker server (400), said claim request including a client device (200) identity;
establishing (160) a session with the client device (200) responsive to the claim request;
receiving (165), from the client device (200), a service request for a specified service provided by the device broker server (400) utilizing one of said point of sale devices;
controlling (170) the point of sale device (20) to provide the requested service; and
sending (175) a response message to the client device (200) to indicate a result of the service provided by the device broker server (400); and
terminating (180) the session with the client device (200).

5. The method (150) of claim 4 wherein registering (155) with a device broker registry comprises:
sending (A) a registration request to a registration server (600) that maintains a device broker registry, said registration request containing a device broker identity and a list of device broker capabilities; and
receiving (B), responsive to the registration message, a registration response message from the registration server (600) indicating a result of the registration request.

6. The method of claim 4 wherein establishing (160) a session with the client device (200) comprises:
receiving (F) a claim request from the client device (200); and
sending (G), responsive to the claim request, a grant message indicating to the client device (200) that the claim request is accepted by the device broker server (400).

7. A client device (200) functioning as a POS terminal within a retail store, said method comprising:
a user interface (260) including a user input device (265) for receiving user input and a display (270) for display information to a user;
a network interface (280) for communicating via a communication network with a device broker server (400); and
a processing circuit (220) operatively connected to said user interface and said network interface, said processing circuit (220) configured to:
obtain (105) a list of device broker servers (400), each device broker server (400) configured to control one or more point of sale devices within said retail store;
select (110), from said list, a device broker server (400) for a point of sale transaction;
establish (115) a session with the selected device broker server (400);
send (120), during the session via said network interface , a service request to the selected device broker server (400) to request a service offered by the device broker server (400) utilizing one of the point of sale devices (20); and
receive (125), during said session, a response message from the device broker server (400) responsive to the service request, wherein the response message indicates a result of the requested service provided by the device broker server (400) utilizing the point of sale device (20); and
terminate (130) the session with the device broker server (400).

8. The client device (200) of claim 7 wherein, to obtain (105) a list of device broker servers (400), said processing circuit (220) is configured to:
send (C), via said network interface, a query to a registration server (600) that maintains device broker registry;
receive (D), via said network interface and responsive to the query, a list of available device broker servers (400) from the registration server (600).

9. The client device (200) of claim 7 wherein, to establish (115) a session with the selected device broker server, the processing circuit (100) is configured to:
send (A), via said network interface (280), a claim request to the selected device broker server (400); and
receive (B), via said network interface (280) and responsive to the claim request, a grant message indicating that the claim request is accepted by the device broker server (400).

10. The client device (200) of claim 7 wherein the service comprises one of a pay-by-cash request, pay-by-credit request, pay-by-debit request, scan request, and print receipt request.

11. A device broker server (400) in a retail store for controlling one or more point of sale devices, said device broker server (400) comprising:
a network interface (470) for communicating via a communication network with a client device (200) and a registration server (600); and
a processing circuit (410) operatively connected to said network interface (470), said processing circuit (410) configured to:
register (155) with a device broker registry;
receive (165), from said client device (200), a claim request requesting services of the device broker server (400), said claim request including a client device (200) identity;
establish (160) a session with the client device (200) responsive to the claim request;
receive (165), from the client device (200), a service request for a specified service provided by the device broker server (400) utilizing one of said point of sale devices;
control (170), responsive to the request, said point of sale device to provide the requested service; and
send (175) a response message to the client device (200) to indicate a result of the service provided by the device broker server (400) utilizing the point of sale device (20); and
terminate (180) the session with the client device (200).

12. The device broker server (400) of claim 11 wherein, to register (155) with a device broker registry, the processing circuit (410) is configured to:
send (A) a registration request to a registration server (600) that maintains a device broker registry, said registration request containing a device broker identity and a list of device broker capabilities; and
receive (B), responsive to the registration message, a registration response message from the registration server (600) indicating a result of the registration request.

13. The device broker server (400) of claim 11 wherein the service request received from the client device (200) comprises one of a pay-by-cash request, pay-by-credit request, pay-by-debit request, scan request, and print receipt request.

14. A computer readable medium (245) storing program code (250, 255) that when executed by a processing circuit (220) in a client device (200) functioning as a POS terminal within a retail store, cause the client device (200) to:
obtain (105) a list of device broker servers (400), each device broker server configured to control one or more point of sale devices within said retail store;
select (110), from said list, a device broker server (400) for a point of sale transaction;
establish (115) a session with the selected device broker server(400);
send (120) a service request to the selected device broker server (400) to request a service offered by the device broker server (400) utilizing one of the point of sale devices (20);
receive (125), during said session, a response message from the device broker server (400) responsive to the service request, wherein the response message indicates a result of the requested service provided by the device broker server (400) utilizing the point of sale device (20); and
terminate (130) the session with the device broker server (400).

15. A computer readable medium (440) storing program code (445, 455, 460) that when executed by a processing circuit (410) in a device broker server (400) in a retail store causes the device broker server (400) to:
register (155) with a device broker registry;
receive (165), from a client device (200), a claim request requesting services of the device broker server (400), said claim request including a client device (200) identity;
establish (160) a session with the client device (200) responsive to the claim request;
receive (165), from the client device (200), a service request for a specified service provided by the device broker server (400) utilizing one of said point of sale devices;
control (170) the point of sale device (20) to provide the requested service; and
send (175) a response message to the client device (200) to indicate a result of the service provided by the device broker server (400) utilizing the point of sale device (20); and
terminate (180) the session with the client device (200).
